(19) Europäisches Patentamt
European Patent Office
Office européen des brevets

(11) EP 1 736 513 B1

# (12) EUROPEAN PATENT SPECIFICATION

(45) Date of publication and mention of the grant of the patent:
**02.08.2017 Bulletin 2017/31**

(21) Application number: **05704122.0**

(22) Date of filing: **26.01.2005**

(51) Int Cl.:
*C09B 67/02* (2006.01) *C09B 29/15* (2006.01)
*C09B 63/00* (2006.01) *C09B 67/00* (2006.01)

(86) International application number:
**PCT/JP2005/000985**

(87) International publication number:
**WO 2005/075576 (18.08.2005 Gazette 2005/33)**

## (54) DRY C.I. PIGMENT RED 57:1, DRY PIGMENT COMPOSITION AND METHOD FOR PRODUCING THEM

TROCKENES C.I. PIGMENT RED 57:1, TROCKENPIGMENTZUSAMMENSETZUNG UND VERFAHREN ZU BEIDER HERSTELLUNG

PIGMENT ROUGE SEC CONNU SOUS LE NOM INCI « PIGMENT RED 57:1 », COMPOSITION À BASE DU PIGMENT SEC ET PROCÉDÉ POUR LES PRODUIRE

(84) Designated Contracting States:
**DE DK FR GB**

(30) Priority: **04.02.2004 JP 2004027923**

(43) Date of publication of application:
**27.12.2006 Bulletin 2006/52**

(73) Proprietor: **DIC Corporation**
**Tokyo (JP)**

(72) Inventors:
- **OGATA, Akihiro**
**Kashima-shi, Ibaraki 3140031 (JP)**
- **KOBAYASHI, Nagatoshi**
**Kashima-shi, Ibaraki 3140006 (JP)**
- **UI, Masashi**
**Katori-gun, Chiba 2890407 (JP)**

(74) Representative: **Beckmann, Claus et al**
**Kraus & Weisert**
**Patentanwälte PartGmbB**
**Thomas-Wimmer-Ring 15**
**80539 München (DE)**

(56) References cited:
**GB-A- 334 874**
**JP-A- 2 294 363**
**JP-A- 2000 160 048**
**JP-A- 2003 089 755**
**US-A- 4 767 844**
**US-A- 5 190 585**
**US-A- 6 159 649**

- **KOBAYASHI N ET AL: "Pigment water paste for lithographic printing ink, comprises tertiary amine or tertiary amine salt containing specific hydrocarbon groups, organic pigment and water", WPI/THOMSON,, vol. 2003, no. 33, 13 December 2002 (2002-12-13), XP002506657, -& JP 2002 356641 A (DAINIPPON INK & CHEMICALS) 13 December 2002 (2002-12-13)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present invention relates to a method for preparing a dried C.I. Pigment Red 57:1 composition.

BACKGROUND ART

C.I. Pigment Red 57:1 is a pigment represented by the following formula:

[Chemical Formula 1]

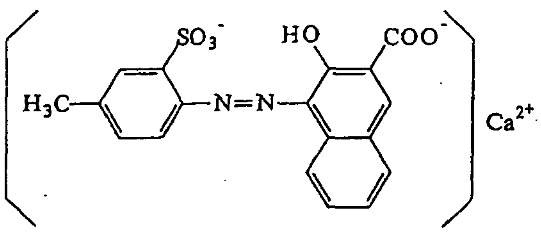

This pigment is a red pigment which is popularly referred to as Carmine 6B or Lithol Rubine and is also referred to as calcium bis[2-(3-carboxy-2-hydroxynaphthylazo)-5-methylbenzenesulfonate] (IUPAC Name), 2-naphthalenecarboxylic acid or 3-hydroxy-4-[(4-methyl-2-sulfophenyl)azo]-, calcium salt (1:1) (CAS Name). IUPAC is an abbreviated name of International Union of Pure and Applied Chemistry and CAS is an abbreviated name of Chemical Abstracts Service. This pigment is widely used as a colorant of various inks, plastic molded articles, coating materials and toners for developing electrostatic image development.

This pigment is one of typical monoazo lake pigments and is prepared by conducting the diazo coupling reaction and the laking reaction in water. The pigment thus obtained is used for coloration of a medium to be colored in a wet state such as press-cake, or used for coloration of a medium to be colored in a dry state such as powder after drying the pigment in a wet state.

A dried C.I. Pigment Red 57:1 having a BET specific surface area as measured by a nitrogen adsorption method within a range from 60 to 110 $m^2/g$ is generally used as the colorant described above.

This pigment has such a drawback that it is comparatively difficult to finely disperse the pigment in a medium to be colored such as varnish in a dry state and a coloring substance having excellent coloring properties is hardly obtained. Therefore, a coloring substance such as printing ink is directly prepared from this pigment in a wet state, not in a dry state. However, in order to directly prepare the coloring substance such as printing ink from the pigment in a wet state, there is required a special apparatus such as flusher used to satisfactorily disperse the pigment with a weak force within a short time. The pigment in a wet state has such a drawback that it may be frozen during the storage in winter season, or may get mildewed due to saprophytic bacteria during the storage in summer season, and thus a printing ink must be prepared immediately after preparing the pigment in a wet state. Although the pigment in a dry state does not have these problems, a troublesome operation of kneading with a strong force for a long time so as to disperse the pigment is required in order to obtain a coloring substance having excellent coloring properties.

As described above, the C.I. Pigment Red 57:1 is prepared in water and therefore the non-dried pigment in a wet state is finely dispersed in a medium to be colored with ease because of comparatively weak aggregation between pigment particles. This is because the state of the pigment is an agglomerate state in which primary particles of the pigment are adhered with each other at a corner or edge. However, when the pigment in a wet state is dried, pigment particles, which were in an agglomerate state, are strongly aggregated with each other, thus resulting in an aggregate state in which primary particles are face-to-face adhered with each other to form secondary particles.

The aggregation state of the pigment exerts a large influence on coloring properties of a coloring substance and, when the pigment is in an agglomerate state, the pigment can be dispersed in a medium to be colored with a weaker force within a shorter time, and thus obtained coloring substances such as printing inks, coating materials and plastic molded articles are excellent in coloring properties such as tinting strength. Thus, various methods of preparing a dried C.I. Pigment Red 57:1 in an agglomerate state have been proposed.

Japanese Unexamined Patent Publication, First Publication No. Sho 59-191765 (claims in page 1, left column, line 4 to page 2, upper left column, line 4, page 3, upper left column, lines 3 to 11, and page 9, upper left column, line 7 from the bottom to the same page, lower right column, line 7 from the bottom) describes a method of preparing a C.I.

Pigment Red 57:1 having a water content of 2 to 19% in an agglomerate state from a pigment press-cake, using a fluidized bed dryer or a spray dryer each having an improved mechanism, under improved drying conditions of the dryer.

Also, Japanese Unexamined Patent Publication, First Publication No. Hei 5-184901 (claims in page 2, and Example 1 in the same page, paragraph numbers 0022 to 0024) describes a method of preparing a porous, bulky and granular dried C.I. Pigment Red 57:1, comprising the steps of bubbling a gas, which does not react with an aqueous pigment suspension, into an aqueous pigment suspension, followed by vigorous stirring, filtration, forming into a strand shape and further drying.

Furthermore, Japanese Unexamined Patent Publication, First Publication No. Hei 9-188846 (claims in page 2, paragraph number 0008 in the same page, and Examples in the page 4, paragraph numbers 0016 to 0017) describes a method of preparing a printing ink comprising a bulky and granular dried C.I. Pigment Red 57:1.

However, the pigment described in Japanese Unexamined Patent Publication, First Publication No. Sho 59-191765 (claims in page 1, left column, line 4 to page 2, upper left column, line 4, page 3, upper left column, lines 3 to 11, and page 9, upper left column, line 7 from the bottom to the same page, lower right column, line 7 from the bottom) is an agglomerate state when the water content is high within a range from 2 to 19%. However, the pigment obtained by drying so as to adjust the water content to 2% as the lower limit is in an aggregate state, and thus it becomes impossible to sufficiently disperse in a medium to be colored with a weak force within a short time. As a result, only a coloring substance having poor coloring properties could be obtained.

Also, the dry pigments described in Japanese Unexamined Patent Publication, First Publication No. Hei 5-184901 (claims in page 2, and Example 1 in the same page, paragraph numbers 0022 to 0024) and Japanese Unexamined Patent Publication, First Publication No. Hei 9-188846 (claims in page 2, paragraph number 0008 in the same page, and Examples in the page 4, paragraph numbers 0016 to 0017) contain a large number of pigment particles in an agglomerate state as compared with the dry pigment having a water content of 2% described in Japanese Unexamined Patent Publication, First Publication No. Sho 59-191765 (claims in page 1, left column, line 4 to page 2, upper left column, line 4, page 3, upper left column, lines 3 to 11, and page 9, upper left column, line 7 from the bottom to the same page, lower right column, line 7 from the bottom) can be dispersed in a medium to be colored with a weak force within a short time. However, since the dry pigments still contain a large number of pigment particles in an aggregate state, only a coloring substance having insufficient coloring properties could be obtained. In case of making a trial of improving coloring properties by eliminating pigment particles in an aggregate state, the force and time required for dispersion must be increased, and therefore it was impossible to decrease the force and time required for dispersion.

Thus, it is required to develop a dried C.I. Pigment Red 57:1 which is free from the above-described drawbacks common to wet pigments and does not require a special apparatus required to satisfactorily use the wet pigment, and also can be dispersed in a medium to be colored with a weaker force within a shorter time, regardless of the dry pigment, and exhibits more excellent coloring properties than those in case of coloring by using a conventional pigment in a dry state.

US 5,190,585 describes processes for the production of a pigment composition comprising: Ia) contacting a pigment, before or during its synthesis, with a water-immiscible carrier medium, and then completing the pigment synthesis to produce a pigment composition comprising the pigment and the water-immiscible carrier medium, and Ib) contacting the resulting aqueous fully-synthesized pigment composition with an aliphatic organic acid and optionally a water-immiscible carrier medium; adjusting the pH value of the mixture so obtained to below 7.0; and then adjusting to the pH value of the mixture to a value above 7.0 thereby transferring the organic acid into the aqueous phase; and isolating a pigment composition comprising the pigment and the water-immiscible carrier medium, or II) contacting an aqueous fully-synthesized pigment slurry with an aliphatic organic acid and a water-immiscible carrier medium according to above step Ib).

JP 2002 356641 A relates to the problem to provide an aqueous pigment paste capable of giving a lithographic ink which exhibits high-bleed resistance when used with dampening water and has a low emulsification degree and is suitable for emulsification. As a solution to this problem, the document describes an aqueous pigment paste for the lithographic ink which contains (A) a tertiary amine or its salt, of which at least two of three hydrocarbon groups are each a 10-18C hydrocarbon group, (B) an organic pigment, (C) and water.

GB 334 874 (A) describes oil and water-insoluble lakes of azodyestuffs which are prepared by incorporating a metallic compound in a mixture of an azo dye of acidic character and a resin soap in aqueous medium, to form a precipitate of the metallic compounds of resinate and azo-dye in which the resinate is present in amounts of from about 5-60 per cent of the finished product. Alternatively, the metallic resinate is incorporated with the precipitated pigment of the azo-dye of acidic character prior to the development of the pigment and the latter is then developed by boiling. The azo-dye may be soluble, slightly soluble or substantially insoluble in water and usually contains sulphonic acid and/or carboxylic acid groups. The resin soap may be incorporated wholly or in part, prior to or during the coupling of the azo-dye components and in the case of a water soluble dye substantially simultaneous precipitation of the metallic compounds of resinate and azo-dye may take place. The metallic salt is preferably an alkaline earth metal compound such as calcium chloride, barium chloride, or mixture thereof, or a salt or salts of magnesium, lead or copper may be used.

US 6,159,649 describes the use of an azo pigment of the following formula

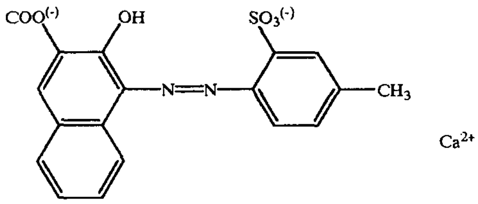

as a colorant in electrophotographic toners, electrophotographic developers, powders and powder coatings, and electret materials, wherein said azo pigment is prepared in the presence of 20 to 50% by weight of an auxiliary selected from the group consisting of a rosin, a salt of a rosin, an abietic acid, and a salt of an abietic acid, wherein said weight is based on the overall weight of the azo pigment including said auxiliary, and wherein the azo pigment has a specific surface area of more than 70 $m^2/g$ and the azo pigment particles comprising the azo pigment have a length-to-width ratio of on average less than 2.8:1 and a mean particle size $d_{50}$ of less than 130 nm.

US 4,767,844 describes an azo lake pigment which is obtained by coupling an aromatic diazo component having a sulfonic acid group with a mixture of 2-hydroxy-3-naphthoic acid and a 2-hydroxy-3-naphthoic acid derivative represented by the following formula

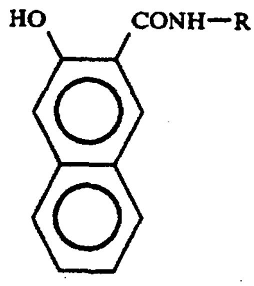

wherein R represents a hydrogen atom, a naphthalene residue, a cyclohexyl group, or a group of the following formula

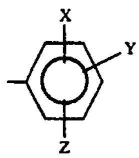

in which each of X, Y and Z represents a hydrogen atom, a lower alkyl group, a lower alkoxy group, a halogen atom, an acetylamino group, a benzoylamino group, a carbomoyl group or a phenylcarbamoyl group, and X and Y together may form a cyclized benzimidazolone, benzthiazole or benzoxazole group, and laking the resulting dye with an alkaline earth metal salt or a manganese salt.

DISCLOSURE OF THE INVENTION

An object of the present invention is to provide a method for preparing a dried pigment composition comprising C.I. Pigment Red 57:1 and rosins, which is free from the above-described drawbacks common to wet pigments and does not require a special apparatus required to satisfactorily use the wet pigment, and also can be dispersed in a medium to be colored with a weaker force within a shorter time, regardless of the dry pigment, and exhibits more excellent coloring properties than those in case of coloring by using a conventional pigment in a dry state.

The present inventors have intensively studied so as to obtain a dried pigment composition comprising C.I. Pigment Red 57:1 and rosins, which can be dispersed in a medium to be colored with a weaker force within a shorter time and also have more excellent coloring properties than those of a conventional one, and found that a dried pigment composition comprising C.I. Pigment Red 57:1 and rosins, which can satisfy the above properties, can be obtained even when dried thereafter by employing a specific method as a method of laking a 2-(3-carboxy-2-hydroxynaphthylazo)-5-methylbenzenesulfonic acid water-soluble salt obtained by the coupling reaction, not the above-described known improved method.

The present inventors have conducted the measurement of values of various physical properties so as to find out a difference in properties between a dried pigment composition thus obtained by a specific laking method and a dried pigment or a dried pigment composition obtained by the above-described known improved method. As a result,

they have not recognized a difference in a BET specific surface area between them, but found a difference in the measurement results of pore distribution of an aggregate of primary particles. They have also found that an indicator such as total volume of pores having a diameter within a specific range among a diameter range of pores distributed widely in particles of the dried pigment composition has a strong correlation with ease of dispersion in the medium to be colored in the dried pigment composition as compared with an indicator such as total volume of all pores of the dried pigment composition, which indicates porosity of the aggregate, and only a dried pigment composition in which the total volume of pores having a diameter within a specific range is within a specific range can be dispersed in the medium to be colored with a weaker force within a shorter time, and thus the present invention has been completed.

That is, the present invention provides the method according to claim 1. Preferred embodiments of the method are defined in the dependent claims.

The dried pigment composition containing C.I. Pigment Red 57:1 and rosins obtained by the method of the present invention has the value of a specific specific surface area and also has a specific pore volume value within a specific range of a pore diameter and therefore exerts such a noticeably remarkable effect that it is free from the above-described drawbacks common to wet pigments and does not require a special apparatus required to satisfactorily use the wet pigment, and also can be dispersed in a medium to be colored with a weaker force within a shorter time and exhibits more excellent coloring properties than those in case of coloring the medium to be colored using a conventional dried pigment or dried pigment composition.

Since a laking process, which is reverse to a conventional process, is conducted in the method for preparing the dried pigment composition containing C.I. Pigment Red 57:1 and rosins of the present invention, the method exerts such a noticeably remarkable effect that, even when a production process that follows the laking process is conducted in the same manner as in case of a conventional method, the resulting dried pigment or dried pigment composition can be dispersed in a medium to be colored with a weaker force within a shorter time and is capable of coloring the medium to be colored with more excellent coloring properties than those in case of a conventional method, and also the dried pigment composition, which has the value of a specific specific surface area and exhibits a specific pore volume value within a specific range of a pore diameter, can be easily prepared.

BEST MODE FOR CARRYING OUT THE INVENTION

The present invention will now be described in detail.

In the present invention, C.I. Pigment Red 57:1 is abbreviated to a pigment hereinafter. The pigment composition obtained by the method of the present invention is a dried C.I. Pigment Red 57:1 composition, wherein a BET specific surface area as measured by a nitrogen adsorption method is from 60 to 110 $m^2/g$ and a total volume of pores having a diameter within a range from 0.1 to 3.0 μm as measured by a mercury penetration method is from 1.30 to 2.00 ml/g.

In the present invention, the property capable of dispersing in a medium to be colored with a weaker force within a shorter time is sometimes abbreviated to easy dispersibility. The medium to be colored is described in detail hereinafter.

The dried pigment composition obtained by the method of the present invention is characterized in that a BET specific surface area as measured by a nitrogen adsorption method is within a specific range and also a total volume of pores having a diameter within a specific range as measured by a mercury penetration method is within a specific range. The term "dried" as used herein means that a loss on heating of a pigment composition as measured according to "Test Method for Pigment" 23 defined in Japanese Industrial Standard JIS K5101-1991 is less than 3%. In this "Test Method for Pigment", the pigment composition as a sample is dried in a dryer maintained at the temperature of 105±2°C for two hours. The "loss on heating" is calculated by the following equation. The smaller the loss on heating, the higher the degree of drying.

$$W = [(m_0 - m_1)/m_0] \times 100 \qquad (1)$$

where W denotes a loss on heating (%), $m_0$ denotes mass (g) of a sample, and $m_1$ denotes mass (g) of a sample after drying.

The BET specific surface area as measured by a nitrogen adsorption method in the present invention means a specific surface area of a dried pigment composition as measured according to "Method for Measurement of Amount of Gass Adsorbed by One Point Method" defined in Appendix 2 of Japanese Industrial Standard JIS Z8830-1990. This BET specific surface area is measured based on BET theory and the measuring objects are micropores or mesopores of pigment primary particles constituting an aggregate. According to the definition of IUPAC, assuming that an opening of pores has a circular shape, pores having an opening diameter of 2 nm or less belong to micropores, pores having an opening diameter of 2 to 50 nm belong to mesopores, and pores having an opening diameter of 50 nm (0.05 μm) to

1000 μm belong to micropores.

The dried pigment composition obtained by the method of the present invention has the same BET specific surface area as that of a conventional dried pigment which is used as a colorant, and the BET specific surface area is from 60 to 110 $m^2/g$. It is considered that a pigment primary particle diameter has a high correlation with the value of the specific surface area and coloring properties. In this industrial field, it is generally considered that the value of the specific surface area increases as the primary particle diameter of the pigment decreases, and thus the dried pigment composition exhibits excellent coloring properties. Therefore, coloring properties of the dried pigment composition obtained by the method of the present invention are evaluated by comparison between pigments having the specific surface area of the same level.

In general, the dried pigment having comparatively small value of the specific surface area is referred to as an opaque type pigment, while the dried pigment having comparatively large value of the specific surface area is referred to as a transparent type pigment, and these pigments are properly used according to the purposes. When the BET specific surface area is less than 60 $m^2/g$, the dried pigment composition is insufficient in tinting strength. On the other hand, when it exceeds 110 $m^2/g$, dispersibility becomes insufficient. Therefore, it is not preferred in both cases. Among these dried pigment compositions, the dried pigment composition having the BET specific surface area within a range from 70 to 85 $m^2/g$ is preferable because colored images having excellent clarity and gloss are obtained when used in the preparation of a lithographic printing ink containing a lithographic printing varnish as a medium to be colored, as described hereinafter.

Pore distribution and pore volume will now be described.

The dried pigment composition can be considered as a bulk material of the above-described aggregates and various pores having a diameter larger than that of micropores or mesopores, which are referred to as macropores, are opened on the surface of the aggregate. This pore is a gap formed by adhesion of primary particles of the pigment, or a gap formed by adhesion of secondary particles. It was impossible to apply BET theory, which is applied in the micropore or mesopore range such as BET specific surface area, to gas adsorption behavior in macropores. Recently, means for measuring pores in the macropore range of the powder has been developed. This is the measurement of pore distribution by a penetration method. According to this measurement, it became possible to estimate behavior of the pigment as the aggregate through measuring means other than means for measuring the BET specific surface area.

According to the measurement of pore distribution by a penetration method, it is possible to determine distribution of the diameter of pores in the macropore range of the aggregate of pigment primary particles, and the volume of pores assuming that the pore has a cylindrical shape. According to a mercury penetration method, liquid mercury is penetrated into pores in the micropore range of the dried pigment by impregnating with liquid mercury and applying pressure after evacuating the sample. Liquid mercury has such a property that it does not wet the pigment when contacted with it because of high surface tension, and does not penetrate into pores of the pigment as long as the pressure is not applied. Also liquid mercury does not penetrate into pores at random as a gas molecule capable of freely moving, like a nitrogen gas used in the measurement of the BET specific surface area, but penetrates into pores in the form of liquid as continuous fluid. That is, according to the mercury penetration method, the following process is repeated. That is, first, liquid mercury penetrates into large pores and, after filling pores having a fixed size with liquid mercury, liquid mercury penetrates into pores having a smaller size and the pore are filled with liquid mercury. Until large pores are filled with liquid mercury, liquid mercury does not penetrate into pores having a smaller size. Through such a process, all pores having a measurable size are filled with liquid mercury. Since mercury has a larger atomic radius than that of nitrogen, it does not penetrate into pores having a diameter within micropore to mesopore range of pigment primary particles like the measuring object in the BET specific surface area. Therefore, pores having a smaller size than that of a mercury molecule are not used as a measuring object of the mercury penetration method. When the penetration pressure of mercury gradually increases in the mercury penetration method, the above-described phenomenon occurs repeatedly and mercury penetrates into pores having a larger size of the aggregate. At this time, the amount of liquid mercury to be penetrated into pores is saturated under pressure within a certain range. This saturation occurs when pores having a fixed size are properly filled with mercury. The amount of liquid mercury to be penetrated corresponds to the pore volume. By utilizing properties inherent to mercury, various total volumes of pores having various fixed diameters can be determined.

According to the mercury penetration method, pores of the sample are forcibly filled with liquid mercury by applying the pressure. Therefore, when liquid other than mercury penetrates or fills into pores of the sample to be measured, liquid mercury does not penetrate into the pores and thus the pore volume can not be accurately measured. Therefore, it is necessary that the sample having a high water content or wetted with an organic solvent is sufficiently dried before the measurement of the pore volume and also a trace amount of water or an organic solvent, which can be present in the pores, is sufficiently removed by evacuation. Since the pigment composition obtained by the method of the present invention is intended to be used in a dry state and the loss on heating is less than 3%, as described above, all pores existing in the pigment are substantially blow holes and the pore volume can be accurately measured as it is.

In the measurement of pore distribution in the penetration method, a relation between the penetration pressure and the pore diameter is derived from the following Washburn's equation:

$$D = -(1/P) \cdot 4\sigma \cdot \cos\theta \qquad (2)$$

where D denotes a pore diameter, P denotes a pressure, σ denotes a surface tension, and θ denotes a contact angle.

Since the mercury penetration method is employed in the present invention, the surface tension o and the contact angle θ are constants based on liquid mercury as a substance to be penetrated. The surface tension σ and the contact angle θ of mercury are 4.85 mN/cm and 130.0°, respectively.

The following simple equation can be established by fixing the surface tension σ and the contact angle θ, unifying an absolute pressure (psia) as a pressure unit and a pore diameter (μm) and developing again. The pore diameter of the dried pigment composition can be determined by this equation:

$$D = 180/P \qquad (3)$$

where D and P are as defined above.

By increasing the pressure in case of penetrating liquid mercury into pores, continuously and gradually, each pore volume in a specific pore diameter range can be determined. An increase in pressure corresponds to penetration of liquid mercury into smaller pores. As described above, there arises such a phenomenon (saturation) in which, even when the penetration pressure of liquid mercury increases, the amount of liquid mercury to be penetrated in the micropressure interval does not vary and shows a fixed value. Moreover, saturation in each micropressure interval means that proper filling of liquid mercury into pores having a fixed size has been completed, and also suggests that penetration of liquid mercury into smaller pores is initiated when the pressure is slightly increased. This saturation occurs at random in some micropressure intervals according to distribution of the pore diameter.

Although it is not sure in what micropressure interval the saturation occurs, the penetration pressure and the pore diameter at which liquid mercury can be penetrated under the pressure can be easily determined. By the way, according to the above-described simple equation, the diameter of pores of the dried pigment in which liquid mercury can be penetrated under the absolute pressure of 10 psia (1.45 x $10^{-3}$ N/$m^2$) is about 18 μm, and the diameter of pores of the dried pigment in which liquid mercury can be penetrated under the absolute pressure of 15 psia (2.175 x $10^{-3}$ N/$m^2$) is about 12 μm.

In the present invention, with respect to pores having a diameter within a range from about 0.003 to 180 μm, the volume of the pores is measured. This pore diameter corresponds to a pressure within a range from about 1 to 60000 psia.

While the method for measuring the pore volume was described in detail based on the measurement in the pressure increasing process of measuring while gradually increasing the pressure from the atmospheric pressure, it is also possible to conduct the same measurement in the pressure decreasing press of measuring while gradually decreasing the pressure from the maximum pressure. Reliability of the measurement results is enhanced by confirming that both measurement results of the pressure increasing process and the pressure decreasing process are the same.

The present inventors have found that, by selecting the total volume of pores having a diameter within a specific range among the total volume having a pore diameter within a wide measurable range, a coefficient of correlation between the total volume and the degree of difficulty of dispersion of the following dried pigment in a medium to be colored. Based on this finding, they have found out that the total volume of pores having a pore diameter within a specific range serves a large indicator for finding the degree of difficulty of dispersion of the dried pigment in a medium to be colored. The aggregation state of the pigment can be estimated from the total volume of pores having a pore diameter within a specific range. That is, larger total volume of pores having a pore diameter within a specific range means that the pores can be filled with a larger amount of mercury, and it can be considered that more agglomerate state is formed by the dried pigment.

According to the present inventors' finding, the dried pigment composition, which is excellent in dispersibility in a medium to be colored, is a dried pigment composition in which the total volume of pores having a diameter within a range from 0.1 to 3.0 μm is within a range from 1.30 to 2.00 ml/g, and preferably from 1.40 to 2.00 ml/g. Among these, the dried pigment composition, which satisfies the above-described constituent features and has a total volume of pores having a pore diameter within a range from 0.1 to 1.0 μm within a range from 1.10 to 1.80 ml/g, is most excellent in dispersibility in a medium to be colored, and is particularly preferable. By optimizing the reaction temperature, pH and the adding rate of a 2-(3-carboxy-2-hydroxynaphthylazo)-5-methylbenzenesulfonic acid water-soluble salt in the laking process described in detail hereinafter, it is possible to obtain a dried pigment composition which satisfies the conditions that the total volume of pores having a pore diameter within a range from 0.1 to 1.0 μm is from 1.10 to 1.80 ml/g.

The dried pigment composition obtained by the method of the present invention has more excellent dispersibility suited for use as the dried pigment composition and exhibits more excellent coloring properties than those in case of

coloring using a conventional dried pigment composition as long as the total volume of pores having a diameter within a range from 0.1 to 3.0 μm is from 1.30 to 2.00 ml/g, regardless of a transparent or opaque type pigment. The opaque type pigment has more excellent dispersibility suited for use as the dried pigment, and exhibits more excellent coloring properties than those in case of coloring using a wet pigment, regardless of a dried pigment.

Examples of the apparatus for measuring pore distribution of the dried pigment include AutoPore IV9500 series manufactured by Micromellitics Co., which is on sale by Shimadzu Corporation, and PoreMaster® series manufactured by Yuasa Ionics Inc.

The average particle diameter of the dried pigment as used herein means a particle diameter at which cumulative size distribution is 50% in particle diameter distribution of powder of the dried pigment measured by a laser diffraction type particle diameter distribution measuring apparatus. The average particle diameter of the dried pigment is not specifically limited and is from 5 to 100 μm. Among these, the dried pigment having the average particle diameter of 5 to 80 μm is in the form of powder and is preferable.

Since the powder has smaller bulk than that of the granule and mass per unit volume can be increased, a larger amount of the powder can be filled into a bag having a fixed volume and therefore it is more advantageous in view of efficient physical distribution. The dried pigment having the average particle diameter of 100 μm to 10 mm is often referred to as a granule and this granule can be easily distinguished from the powder having the average particle diameter within a range from 5 to 80 μm.

The method of the present invention provides a dried pigment composition comprising a C.I. Pigment Red 57:1 and rosins, the amount of the latter being 3 to 50 parts by mass based on 100 parts by mass of the dried former, wherein a BET specific surface area as measured by a nitrogen adsorption method is from 60 to 110 $m^2/g$ and a total volume of pores having a diameter within a range from 0.1 to 3.0 μm as measured by a mercury penetration method is from 1.30 to 2.00 ml/g. In the dried pigment composition obtained by the method of the present invention, a mixture containing a C.I. Pigment Red 57:1 and rosins must satisfy the above-described definition of the "dried".

Rosins in the dried pigment composition may be any conventionally known rosins and examples thereof include rosin containing abietic acid as a main component, disproportionated rosin, partially hydrogenated rosin, completely hydrogenated rosin, maleic acid-modified rosin, fumaric acid-modified rosin, polymerized rosin, and salts thereof. Calcium salts of various rosins described above are water-insoluble salts, and salts having a high softening point are preferable because dispersibility of the pigment in a medium to be colored can be more enhanced. Rosins, which have a loss on heating at 105°C of 3% or less, similar to the above-described dried pigments and are as small as possible, are preferable. From such a point of view, rosins are preferably at least one kind of rosins selected from the group consisting of calcium salt of disproportionated rosin, calcium salt of partially hydrogenated rosin and calcium salt of completely hydrogenated rosin. In the dried pigment composition obtained by the method of the present invention composition, the content of rosins is, for example, from 3 to 50 parts by mass, and preferably from 5 to 30 parts, based on 100 parts of the dried C.I. Pigment Red 57:1.

The dried pigment mentioned above and the dried pigment composition obtained by the method of the present invention differ only in the fact that a specific amount of rosins are contained or not. Therefore, definition of terms, measuring method and preferred range of various numerical values are the same in case of the dried pigment and the dried pigment composition.

The dried pigment in which a BET specific surface area as measured by a nitrogen adsorption method is from 60 to 110 $m^2/g$ can be prepared by mixing an aqueous solution or aqueous suspension of a 2-(3-carboxy-2-hydroxynaphthylazo)-5-methylbenzenesulfonic acid water-soluble salt with an aqueous solution containing an inorganic calcium compound, and converting the mixture into a lake, followed by heating, filtration and further drying. Hereinafter, the 2-(3-carboxy-2-hydroxynaphthylazo)-5-methylbenzenesulfonic acid water-soluble salt is referred to as an azo dye.

By repeating the same operation as that described above, except that an aqueous solution or aqueous suspension of an azo dye is added to an aqueous solution containing an inorganic calcium compound, and converting the mixture into a lake, there can be prepared a dried pigment composition which is characterized in that the total volume of pores having a diameter within a range from 0.1 to 3.0 μm as measured by a mercury penetration method is from 1.30 to 2.00 ml/g

Most significant feature of the method for preparing a dried pigment composition of the present invention is that an aqueous solution or aqueous suspension of an azo dye is added to an aqueous solution containing an inorganic calcium compound, and converting the mixture into a lake (a laking process, which is reverse to a conventional process, is conducted). Hereinafter, the aqueous solution or aqueous suspension of the azo dye is abbreviated to an aqueous solution of an azo dye.

The azo dye can be prepared, for example, by mixing a suspension containing a diazonium salt component (hereinafter abbreviated to a diazo component) of 4-aminotoluene-3-sulfonic acid with an aqueous solution containing a coupler component of 2-hydroxy-3-naphthoic acid and subjecting the mixture to the coupling reaction.

If necessary, the diazo component can contain a diazonium salt of an isomer or a derivative of 4-aminotoluene-3-sulfonic acid, for example, a diazonium salt of 1-amino-4-methylbenzene-3-sulfonic acid, or a diazonium salt of the

other aromatic amine such as tobias acid. The content of the diazonium salt of the other aromatic amine is preferably within 15 mol% of the diazo component.

Similarly, if necessary, the coupler component can contain an isomer or a derivative of 2-hydroxy-3-naphthoic acid, for example, other phenols or naphthols such as 2-hydroxynaphthalene. The content of the other phenols or naphthols is preferably within 15 mol% of 2-hydroxy-3-naphthoic acid.

The water-soluble azo dye can be converted into a water-insoluble calcium bis[2-(3-carboxy-2-hydroxynaphthylazo)-5-methylbenzenesulfonate], for example, by adding the aqueous solution of the azo dye to the aqueous solution containing the inorganic calcium compound and converting the mixture into a lake. The calcium bis[2-(3-carboxy-2-hydroxynaphthylazo)-5-methylbenzenesulfonate] is a substance having the same chemical structure as that defined in C.I. Pigment Red 57:1 and is water insoluble, and therefore it can be considered as a pigment.

The concentration of the aqueous solution of the azo dye is not specifically limited and is, for example, from 0.3 to 20% by mass, and preferably from 1 to 10%. The concentration of the aqueous solution containing the inorganic calcium compound is not specifically limited and is, for example, from 2 to 20% by mass, and preferably from 5 to 15%.

The laking process is conducted using the aqueous solution of the azo dye and the aqueous solution containing the inorganic calcium compound in the required amount enough to convert the entire azo dye as a water-soluble salt into a calcium salt. The azo dye is converted into a water-insoluble azo pigment because it is converted into a calcium salt.

The aqueous solution of the azo dye may be added to the aqueous solution containing the inorganic calcium compound at a time, but is preferably added to the aqueous solution containing the inorganic calcium compound in considerably large amount after being divided into several portions, or added dropwise continuously to the aqueous solution containing the inorganic calcium compound, gradually, so as to attain a fixed adding rate. In the laking process, the temperature of the aqueous solution of the azo dye and the aqueous solution containing the inorganic calcium compound is, for example, from 0 to 50°C, and preferably 20 to 40°C. It is preferred that the aqueous solution of the azo dye and the aqueous solution containing the inorganic calcium compound are mixed at the temperature within the above range for 30 minutes to 5 hours, preferably 1 to 3 hours, and the laking reaction is conducted.

The inorganic calcium compound used to prepare the aqueous solution of the inorganic calcium compound is preferably a compound having high water solubility such as calcium chloride. The inorganic calcium compound is referred to as a laking agent.

It is possible to prepare C.I. Pigment Red 57:1, in which the total volume of pores having a diameter within a range from 0.1 to 3.0 μm as measured by a mercury penetration method is from 1.30 to 2.00 ml/g, only by selecting the specific surface area within a range from 60 to 110 $m^2$/g through the laking process, which is reverse to a conventional process, without heating. However, in case of preparing C.I. Pigment Red 57:1 having a preferable ET specific surface area and preferable pore total volume described above, the following heating is preferably conducted, in addition to the laking process which is reverse to a conventional process.

The calcium bis[2-(3-carboxy-2-hydroxynaphthylazo)-5-methylbenzenesulfonate] obtained by the laking process which is reverse to a conventional process can be converted into C.I. Pigment Red 57:1 having the above-described specific characteristics , easily and certainly, by heating, filtering and drying using a conventionally known method. The reaction mixture containing the calcium bis[2-(3-carboxy-2-hydroxynaphthylazo)-5-methylbenzenesulfonate] obtained by the laking process which is reverse to a conventional process and water is heated, for example, by heating at the temperature within a range from 50 to 90°C, and preferably from 50 to 80°C for 30 minutes to 3 hours. Thus, an aqueous suspension of the heated pigment can be obtained. This heating process is a preferable unit process used to prepare C.I. Pigment Red 57:1 having preferable pore total volume and to control the primary particle diameter of the pigment so as to impart properties suited for intended purposes. Therefore, sampling is conducted with optional time intervals during heating and heating is terminated after desired properties were attained. The primary particle diameter of the pigment can be increased by heating for a long time in case of heating at a fixed temperature, or by heating at higher temperature in case of heating for a fixed time.

Then, the heated aqueous pigment suspension is filtered and dried to obtain a dried pigment in which a BET specific surface area as measured by a nitrogen adsorption method is from 60 to 110 $m^2$/g and a total volume of pores having a diameter within a range from 0.1 to 3.0 μm as measured by a mercury penetration method is from 1.30 to 2.00 ml/g. As described above, the heated aqueous pigment suspension may be dried so that a loss on heating at 105°C is less than 3%. After drying, the heated aqueous pigment suspension may be further pulverized. This pulverizing process is a process of pulverizing a lump of the dried pigment and a dried pigment having various shapes such as powder and granule can be obtained by controlling the degree of pulverizing (pulverizing strength). In order to form the dried pigment into powder, pulverizing conditions may be selected so that the pulverized dried pigment has an average particle diameter within a range from 5 to 100 μm. Although the average particle diameter of the dried pigment changes before and after this pulverizing process, the value of the BET specific surface area and the value of the total volume of pores having a diameter within a specific range do not vary and must not vary before and after this pulverizing process.

The dried pigment composition obtained by the method of the present invention can be easily prepared by using in combination with rosins in an optional process of the coupling reaction and the laking reaction in case of preparing

calcium bis[2-(3-carboxy-2-hydroxynaphthylazo)-5-methylbenzenesulfonate] in the method for preparing a dried pigment described above.

The method for preparing a dried pigment as described above and the method for preparing a dried pigment composition according to the present invention differ only in the fact that a specific amount of rosins is contained or not. Therefore, definition of terms, measuring method and preferred range of various numerical values are the same in case of the method for preparing a dried pigment as described above and the method for preparing a dried pigment composition.

According to the method for preparing a dried pigment composition of the present invention, the pigment is coated with rosins and a coloring substance having more excellent transparency can be obtained as compared with the case of using only the dried pigment.

Examples of rosins include all rosins described above. The kind and amount of preferred rosins are the same as those described above. In the method for preparing a dried pigment composition, in case of preparing a dried pigment composition according to the above-described method using the aqueous solution of the azo dye containing a water-soluble salt of various rosins, an inorganic calcium compound enough to convert the entire water-soluble salt in the azo dye into a calcium salt is used in the form of an aqueous solution. Excess inorganic calcium compound can be used so as to convert the entire water-soluble salt in the azo dye into a calcium salt and to convert the water-soluble salt of various rosins into a water-insoluble calcium salt. Consequently, the water-soluble salt of the azo dye and the water-soluble salt of various rosins can be simultaneously converted into each corresponding water-insoluble calcium salt, and therefore it is preferred.

Particles of the thus obtained dried pigment composition are in an agglomerate state and can be dispersed in a medium to be colored with a weaker force within a shorter time. The dried pigment composition obtained by the method of the present invention are suited for coloration of printing inks, plastics, coating materials and toners for developing electrostatic charge image. When used for coloration of lithographic printing ink and gravure printing ink among printing inks, the resulting ink exhibits excellent easy dispersibility.

The medium to be colored as used herein means a liquid or solid medium to be colored with the dried pigment composition and examples thereof include resin for printing ink, resin for coating material, molding resin, and mixtures containing an organic solvent, water, various additives and fillers.

Heretofore, C.I. Pigment Red 57:1 has been prepared by coupling a suspension containing a diazo component and an aqueous solution containing a coupler component, adding an aqueous solution of a laking agent to the resulting aqueous solution of the azo dye and converting the mixture into a lake, or previously adding a laking agent to a suspension containing a diazo component and an aqueous solution containing a coupler component and coupling them, followed by heating. In this case, rosins were added to the aqueous solution containing the coupler component or the aqueous solution of the azo dye.

Heretofore, calcium bis[2-(3-carboxy-2-hydroxynaphthylazo)-5-methylbenzenesulfonate] as a reaction product obtained by coupling and laking processes has been used as a dried C.I. Pigment Red 57:1 after heating according to a conventional method, filtration and drying. As is apparent from the present inventors' finding, the dried pigment thus obtained has a BET specific surface area as measured by a nitrogen adsorption method within a range from 60 to 110 $m^2/g$ but shows comparatively smaller value of a total volume of pores having a diameter within a range from 0.1 to 3.0 $\mu m$ as measured by a mercury penetration method as compared with the total volume within the range defined in the present invention, and does not shows excellent dispersibility in the medium to be colored. Also it became apparent that the dried pigment composition obtained by devising apparatus mechanism and drying conditions of the dryer does not show excellent dispersibility in the medium to be colored because of small total volume of pores, similarly. The present invention has been made based on these findings.

EXAMPLES

The present invention will now be described in more detail by way of examples. In the following examples, parts and percentages are by mass unless otherwise specified.

Example 1

After dispersing 165 parts of 4-aminotoluene-3-sulfonic acid in 1050 parts of water, 102 parts of a 35% hydrochloric acid was added and 154 parts of an aqueous 40% sodium nitrite solution was added at a time while maintaining at 0°C to obtain an aqueous suspension containing a diazonium salt of 4-aminotoluene-3-sulfonic acid. The resulting aqueous suspension is used as a diazo component preparation. After dispersing 167.5 parts of 2-hydroxy-3-naphthoic acid in 1300 parts of water at 50°C, 320 parts of an aqueous 25% sodium hydroxide solution was added to obtain an aqueous solution containing a coupler component. This solution is used as a coupler component preparation. This coupler component preparation was cooled to 15 to 20°C and the above-mentioned diazo component preparation was added dropwise over 60 minutes while stirring, and then the coupling reaction was terminated by stirring for 60 minutes

to obtain an aqueous suspension of an azo dye comprising sodium 2-(3-carboxy-2-hydroxynaphthylazo)-5-methylbenzenesulfonate. This aqueous suspension was cooled to 10 to 15°C and 254 parts of an aqueous 25% disproportionated rosin potassium solution was added and, after stirring for 60 minutes, the pH was adjusted to 12.5 using an aqueous 25% sodium hydroxide solution to obtain an aqueous azo dye suspension.

To an aqueous solution obtained by adding 388.7 parts of an aqueous an aqueous 35% calcium chloride solution to 1800 parts of water and adjusting the temperature within a range from 25 to 30°C, the above-mentioned aqueous azo dye suspension was added dropwise over 2 hours to obtain calcium bis[2-(3-carboxy-2-hydroxynaphthylazo)-5-methylbenzenesulfonate], and then the laking reaction was terminated. After the completion of the laking reaction, the aqueous pigment suspension was heated while stirring with heating at 60°C for 90 minutes. The aqueous pigment suspension was filtered, washed with water, dried at 90°C for 10 hours and then pulverized while controlling a pulverizing strength so as to adjust an average particle diameter to 80 μm or less.

Thus, 41 parts of a dried pigment composition containing C.I. Pigment Red 57:1 having a loss on heating of 1.8% and an average particle diameter of 45.1 μm and rosins was obtained as a powder.

Example 2

In the same manner as in Example 1, an aqueous azo dye suspension was prepared.

To an aqueous solution obtained by adding 388.7 parts of an aqueous 35% calcium chloride solution to 1800 parts of water and adjusting the temperature within a range from 31 to 35°C, the above-mentioned aqueous azo dye suspension was added dropwise over 90 minutes to obtain calcium bis[2-(3-carboxy-2-hydroxynaphthylazo)-5-methylbenzenesulfonate], and then the laking reaction was terminated. After the completion of the laking reaction, the aqueous pigment suspension was heated, filtered, washed with water and then pulverized in the same manner as in Example 1.

Thus, 441 parts of a dried pigment composition containing C.I. Pigment Red 57:1 having a loss on heating of 1.1% and an average particle diameter of 36.3 μm and rosins was obtained as a powder.

Comparative Example 1

In the same manner as in Example 1, a diazo component preparation and a coupler component preparation were prepared.

To this diazo component preparation, 388.7 parts of an aqueous 35% calcium chloride solution was added. To this coupler component preparation, 254 parts of an aqueous 25% disproportionated rosin potassium solution was also added. The above-mentioned diazo component preparation and coupler component preparation were simultaneously charged dropwise in a reaction vessel containing 520 parts of water at 20 to 30°C so as to adjust a molar ratio of a coupler component to a diazo component within a range from 1.05 to 1.10, and then both the coupling reaction and the laking reaction were conducted while stirring for 60 minutes or more to obtain calcium bis[2-(3-carboxy-2-hydroxynaphthylazo)-5-methylbenzenesulfonate]. After the completion of the coupling reaction and the laking reaction, this aqueous pigment suspension was heated, filtered, washed with water and then pulverized in the same manner as in Example 1.

Thus, 441 parts of a dried pigment composition containing C.I. Pigment Red 57:1 having a loss on heating of 1.1% and an average particle diameter of 48.9 μm and rosins was obtained as a powder.

Comparative Example 2

To an aqueous azo dye suspension prepared in the same manner as in Example 1, 388.7 parts of an aqueous 35% calcium chloride solution was added to obtain a calcium bis[2-(3-carboxy-2-hydroxynaphthylazo)-5-methylbenzenesulfonate] and then the laking reaction was terminated. After the completion of the laking reaction, the aqueous pigment suspension was heated, filtered, washed with water and then pulverized in the same manner as in Example 1.

Thus, 441 parts of a dried pigment composition containing C.I. Pigment Red 57:1 having a loss on heating of 1.5% and an average particle diameter of 40.7 μm and rosins was obtained as a powder.

Comparative Example 3

As described in Comparative Example 2, an aqueous pigment suspension was filtered, washed with water, dried and then pulverized while controlling a pulverizing strength so as to adjust an average particle diameter within a range from 100 to 500 μm in the same manner as in Example 1.

Thus, a dried pigment composition containing C.I. Pigment Red 57:1 having a loss on heating of 1.5 and rosins was obtained.

With respect to powders of the dried pigment compositions obtained in Example 1, Example 2, Comparative Example 1 and Comparative Example 2, the loss on heating was measured by "Test Method for Pigment" 23 defined

in Japanese Industrial Standard JIS K5101-1991, while the average particle diameter was measured by MICROTRAC® 9220 [laser diffraction type particle diameter distribution measuring apparatus] manufactured by Nikkiso Co., Ltd. All dried pigment compositions obtained in Example 1, Example 2, Comparative Example 1 and Comparative Example 2 had an average particle diameter within a range from 5 to 80 μm and was in the form of a powder.

With respect to powders of the dried pigment compositions obtained in Example 1, Example 2, Comparative Example 1 and Comparative Example 2, the BET specific surface area as measured by a nitrogen adsorption method as well as the total volume of pores having a pore diameter as measured by a mercury penetration method within a range from 0.1 to 3.0 μm and the total volume of pores having a pore diameter within a range from 0.1 to 1.0 μm were measured. The results are shown in Table 1. The methods for measurements of them are as described below.

Method for measurement of specific surface area

The specific surface area of powders of the dried pigment composition was measured by Macsorb HM model-1208 [specific surface area measuring apparatus defined in Japanese Industrial Standard JIS Z8830-1990] manufactured by MOUNTECH CO., LTD.

Method for measurement of pore volume

The pore distribution of powders of the dried pigment composition was measured after subjecting to an evacuation treatment under 50 pmHg as a pretreatment in a Shimadzu-Micromellitics AutoPore IV9520 Model manufactured by Shimadzu Corporation in accordance with a mercury penetration method. It was confirmed that the same measurement results were obtained in both cases of a pressure increasing process and a pressure decreasing process.

As described above, the surface tension of mercury was 4.85 mN/cm and the contact angle of mercury was 130.0°. The cell constant of the sample was 10.79 μl/pF, the cell volume was 0.392 ml, and the pressure during the measurement was 1 to 60000 psia (= 6.895 kPa to 413.7 MPa). This pressure during the measurement of 1 to 60000 psia corresponds to the pore diameter to be measured within a range from 180 μm to 0.003 μm.

Table 1

| Dried pigment composition | Specific surface area ($m^2$/g) | Total volume of pores having a pore diameter within a range from 0.1 to 3.0 μm (ml/g) | Total volume of pores having a pore diameter within a range from 0.1 to 1.0 μm (ml/g) |
|---|---|---|---|
| Example 1 | 75.90 | 1.487 | 1.208 |
| Example 2 | 78.55 | 1.596 | 0.504 |
| Comparative Example 1 | 78.37 | 0.675 | 0.332 |
| Comparative Example 2 | 78.65 | 0.393 | 0.221 |

The dried pigment composition of Comparative Example 2 and that of Comparative Example 3 differ in an average particle diameter and the former is in the form of powder, whereas, the latter was in the form of granule. However, the BET specific surface area, the value of the total volume of pores having a pore diameter within a range from 0.1 to 3.0 μm and the value of the total volume of pores having a pore diameter within a range from 0.1 to 1.0 μm of both dried pigment compositions were the same.

Evaluation of ink dispersibility

Ink dispersibility test of powders of dried pigment composition of the dried pigment compositions obtained in Example 1, Example 2, Comparative Example 1 and Comparative Example 2 was conducted. The results are shown in Table 2. 6 Parts of powders of the dried pigment composition having an average particle diameter within a range from 5 to 80 μm, 39 parts of a vehicle for lithographic printing ink, containing a rosin-modified phenol resin as a medium to be colored, and 5 parts of gas oil were mixed using a spatula and premixed, and then the resulting premix was evaluated using a three-roll manufactured by Buller Co. Using two rolls of this three-roll, the premix was dispersed at 40°C under a compression pressure of 5 bar for 5 minutes and then dispersed by passing through the three-roll under the same conditions three times at most to prepare a simulation lithographic printing ink (lithographic printing ink before mixing with a dryer as a curing accelerator).

Easy dispersibility was evaluated by a grindmeter. Evaluation criteria are as follows:

1 (poor; aggregation of 100 μm or more), 2 (slightly poor; aggregation of 50 to 100 μm), 3 (ordinary; aggregation of 25 to 50 μm), 4 (good; aggregation of 10 to 25 μm) and 5 (excellent; aggregation of 10 μm or less).

Table 2

| Dried pigment composition | Twin roll 5 minutes | Three-roll | | |
|---|---|---|---|---|
| | | 1 Pass | 2 Pass | 3 Pass |
| Example 1 | 2 | 5 | 5 | 5 |
| Example 2 | 2 | 4 | 5 | 5 |
| Comparative Example 1 | 2 | 3 | 4 | 4 |
| Comparative Example 2 | 1 | 2 | 3 | 4 |

As is apparent from the results shown in Table 2, the dried pigment composition of Example 2 is excellent in dispersibility (evaluated as "good" by a grindmeter) in case of a three-roll (1 pass) under the same compression pressure and the same treatment conditions as compared with the dried pigment compositions obtained in Comparative Example 1 and Comparative Example 2, because it satisfies such a constituent feature that the BET specific surface area as measured by a nitrogen adsorption method is from 60 to 110 $m^2/g$ and the total volume of pores having a diameter within a range from 0.1 to 3.0 μm as measured by a mercury penetration method is within a range from 1.30 to 2.00 ml/g. It is also found that the dispersion degree is "very good" and saturated in case of a three-roll (2 pass). This means that the dried pigment composition of Example 2 exhibits the objective tinting strength within a smaller pass number than that in case of the dried pigment compositions of Comparative Example 1 and Comparative Example 2, and that particles of the dried pigment composition are dispersed in a medium to be colored with a weak force within a short time. It is also found that the dried pigment composition of Example 1 causes less aggregation of particles of the pigment composition and shows high final arrival point of dispersion under the same compression pressure and the same pretreatment conditions as a compared with the dried pigment compositions of Comparative Example 1 and Comparative Example 2.

It is also found that particles of the dried pigment composition of Example 1 were dispersed in a medium to be colored with a weaker force than that in case of the dried pigment composition of Example 2 because it satisfies such a constituent feature that the total volume of pores having a diameter within a range from 0.1 to 1.0 μm as measured by a mercury penetration method is within a range from 1.10 to 1.80 ml/g, in addition to the constituent feature of Example 2. It is also found that the dried pigment composition of Comparative Example 1 as a dried pigment composition obtained by a conventional method shows the same dispersibility in case of a three-roll (2 pass) as that in case of a three-roll (1 pass) of the dried pigment composition of Example 2, and that a final arrival point of dispersion is saturated at "good" of three-roll (1 pass) of the dried pigment composition of Example 2.

It is also found that the dried pigment composition of Comparative Example 2 as a dried pigment composition obtained by a conventional method, similar to Comparative Example 1, shows the same dispersibility in case of a three-roll (3 pass) as that in case of a three-roll (1 pass) of the dried pigment composition of Example 2 with difficulty, and that a final arrival point of dispersion is saturated at "good" of three-roll (1 pass) of the dried pigment composition of Example 2.

Granules of the dried pigment composition of Comparative Example 3 were inferior in dispersibility to powders of the dried pigment composition of Example 2 and were also inferior in dispersibility of powders of the dried pigment composition of Comparative Example 2.

INDUSTRIAL APPLICABILITY

The dried pigment composition containing C.I. Pigment Red 57:1 and rosins obtained by the method of the present invention is free from the above-described drawbacks common to wet pigments and does not require a special apparatus required to satisfactorily use the wet pigment, and also can be dispersed in a medium to be colored with a weaker force within a shorter time and exhibits more excellent coloring properties than those in case of coloring the medium to be colored using a conventional dried pigment or dried pigment composition, and thus industrial significance of the pigment composition obtained by the method of the present invention is great.

Since a laking process, which is reverse to a conventional process, is conducted in the method of the present invention, even when a production process that follows the laking process is conducted in the same manner as in case of a conventional method, the resulting dried pigment composition can be dispersed in a medium to be colored with a

weaker force within a shorter time and is capable of coloring the medium to be colored with more excellent coloring properties than those in case of a conventional method, and also the dried pigment composition, which has the value of a specific specific surface area and exhibits a specific pore volume value within a specific range of a pore diameter, can be easily prepared, and thus industrial significance of the method of the present invention is great.

## Claims

1. A method for preparing a dried pigment composition comprising a C.I. Pigment Red 57:1 and rosins, which comprises the steps of adding an aqueous solution or aqueous suspension containing rosins and a 2-(3-carboxy-2-hydroxynaphthylazo)-5-methylbenzenesulfonic acid water-soluble salt to an aqueous solution containing at least an inorganic calcium compound enough to convert the entire water-soluble salt into a calcium salt, and converting the mixture into a lake, followed by heating, filtration and further drying,
wherein the drying is performed such that the loss on heating of the pigment composition in a dryer maintained at a temperature of 105 $\pm$ 2 °C for two hours is less than 3%,
wherein the aqueous solution or aqueous suspension containing 2-(3-carboxy-2-hydroxynaphthylazo)-5-methylbenzenesulfonic acid water-soluble salt is added to the aqueous solution containing an inorganic calcium compound, according to any step of (i) to (iii):

   (i) the aqueous solution or aqueous suspension is added to the aqueous solution containing the inorganic calcium compound at a time;
   (ii) the aqueous solution or aqueous suspension is divided into several portions and they are added to the aqueous solution containing the inorganic calcium compound at a time; and
   (iii) the aqueous solution or aqueous suspension is added dropwise continuously to the aqueous solution containing the inorganic calcium compound gradually, so as to attain a fixed adding rate;

   and wherein
   the amount of the rosins in the composition is 3 to 50 parts by mass based on 100 parts by mass of the dried C.I. Pigment Red 57:1,
   the BET specific surface area as measured by a nitrogen adsorption method is from 60 to 110 $m^2/g$ and
   the total volume of pores having a diameter within a range from 0.1 to 3.0 $\mu$m of the composition as measured by a mercury penetration method is from 1.30 to 2.00 ml/g.

2. The method for preparing the dried pigment composition according to claim 1, wherein pulverizing is conducted after drying so as to adjust the average particle diameter of the dried pigment composition within a range from 5 to 100 um.

3. The method for preparing the dried pigment composition according to claim 1, wherein the concentration of the 2-(3-carboxy-2-hydroxynaphthylazo)-5-methylbenzenesulfonic acid water-soluble salt in the aqueous solution or aqueous suspension is from 0.3 to 20% by mass.

4. The method for preparing the dried pigment composition according to claim 1, wherein the aqueous solution containing an inorganic calcium compound is from 2 to 20% by mass.

5. The method for preparing the dried pigment composition according to claim 1, wherein, in the steps (i) and (iii), the aqueous solution or aqueous suspension and the aqueous solution containing the inorganic calcium compound are mixed at a temperature of from 0 to 50 °C.

6. The method for preparing the dried pigment composition according to claim 1, wherein, in the steps (i) and (iii), the aqueous solution or aqueous suspension and the aqueous solution containing the inorganic calcium compound are mixed at a temperature of from 20 to 40 °C.

7. The method for preparing the dried pigment composition according to claim 5, wherein, in the steps (ii) and (iii), the aqueous solution or aqueous suspension is added to the aqueous solution containing the inorganic calcium compound for 30 minutes to 5 hours.

8. The method for preparing the dried pigment composition according to claim 5, wherein, in the steps (ii) and (iii), the aqueous solution or aqueous suspension is added to the aqueous solution containing the inorganic calcium compound for 1 to 3 hours.

9. The method for preparing the dried pigment composition according to claim 1, wherein the dried pigment in the composition has an average particle diameter of from 5 to 100 μm.

10. The method for preparing the dried pigment composition according to claim 1, wherein the dried pigment composition has less than 3% of a loss on heating of the composition as measured according to Test Method for Pigment 23 defined in Japanese Industrial Standard JIS K5101-1991.

**Patentansprüche**

1. Verfahren zur Herstellung einer getrockneten Pigmentzusammensetzung, umfassend C.I. Pigment Red 57:1 und Terpentinharze, welches folgende Schritte umfasst: Hinzufügen einer wässrigen Lösung oder wässrigen Suspension, enthaltend Terpentinharze und ein wasserlösliches 2-(3-Carboxy-2-hydroxynaphthylazo)-5-methylbenzolsulfonsäuresalz zu einer wässrigen Lösung, enthaltend wenigstens eine anorganische Calciumverbindung in genügendem Maße, so dass das gesamte wasserlösliche Salz in ein Calciumsalz umgewandelt wird, und Umwandeln des Gemischs in einen Lack, gefolgt von Erwärmen, Filtration und weiterem Trocknen,
wobei das Trocknen derart ausgeführt wird, dass der Gewichtsverlust der Pigmentzusammensetzung beim Erwärmen in einem Trockner, der bei einer Temperatur von 105 ± 2°C gehalten wird, für zwei Stunden weniger als 3% beträgt,
wobei die wässrige Lösung oder wässrige Suspension, enthaltend wasserlösliches 2-(3-Carboxy-2-hydroxynaphthylazo)-5-methylbenzolsulfonsäuresalz, zu der wässrigen Lösung, enthaltend eine anorganische Calciumverbindung, gemäß einem der Schritte (i) bis (iii) hinzugefügt wird:

   (i) die wässrige Lösung oder wässrige Suspension wird zu der wässrigen Lösung, enthaltend die anorganische Calciumverbindung, auf einmal hinzugefügt;
   (ii) die wässrige Lösung oder wässrige Suspension wird in mehrere Portionen unterteilt, und diese werden zu der wässrigen Lösung, enthaltend die anorganische Calciumverbindung, auf einmal gegeben; und
   (iii) die wässrige Lösung oder wässrige Suspension wird tropfenweise kontinuierlich zu der wässrigen Lösung, enthaltend die anorganische Calciumverbindung, nach und nach zugegeben, um so eine feste Zugaberate zu erreichen;

   und wobei
   die Menge der Terpentinharze in der Zusammensetzung 3 bis 50 Massenteile, bezogen auf 100 Massenteile des getrockneten C.I. Pigment Red 57:1 beträgt,
   und die spezifische BET-Oberfläche, gemessen durch ein Stickstoffadsorptionsverfahren, 60 bis 110 $m^2/g$ beträgt, und
   das Gesamtvolumen der Poren mit einem Durchmesser innerhalb eines Bereichs von 0,1 bis 3,0 μm der Zusammensetzung, bestimmt durch ein Quecksilberpenetrationsverfahren, 1,30 bis 2,00 ml/g liegt.

2. Verfahren zur Herstellung der getrockneten Pigmentzusammensetzung gemäß Anspruch 1, wobei Pulverisieren nach dem Trocknen ausgeführt wird, um so den durchschnittlichen Teilchendurchmesser der getrockneten Pigmentzusammensetzung innerhalb eines Bereichs von 5 bis 100 μm einzustellen.

3. Verfahren zur Herstellung der getrockneten Pigmentzusammensetzung gemäß Anspruch 1, wobei die Konzentration des wasserlöslichen 2-(3-Carboxy-2-hydroxynaphthylazo)-5-methylbenzolsulfonsäuresalzes in der wässrigen Lösung oder der wässrigen Suspension 0,3 bis 20 Massen-% beträgt.

4. Verfahren zur Herstellung der getrockneten Pigmentzusammensetzung gemäß Anspruch 1, wobei die wässrige Lösung, welche eine anorganische Calciumverbindung enthält, 2 bis 20 Massen-% hat.

5. Verfahren zur Herstellung der getrockneten Pigmentzusammensetzung gemäß Anspruch 1, wobei in den Schritten (i) und (iii) die wässrige Lösung oder wässrige Suspension und die wässrige Lösung, enthaltend die anorganische Calciumverbindung, bei einer Temperatur von 0 bis 50°C vermischt werden.

6. Verfahren zur Herstellung der getrockneten Pigmentzusammensetzung gemäß Anspruch 1, wobei in den Schritten (i) und (iii) die wässrige Lösung oder wässrige Suspension und die wässrige Lösung, enthaltend die anorganische

Calciumverbindung, bei einer Temperatur von 20 bis 40°C vermischt werden.

7. Verfahren zur Herstellung der getrockneten Pigmentzusammensetzung gemäß Anspruch 5, wobei in den Schritten (ii) und (iii) die wässrige Lösung oder die wässrige Suspension zu der wässrigen Lösung, enthaltend die anorganische Calciumverbindung, über 30 Minuten bis 5 Stunden hinweg zugegeben wird.

8. Verfahren zur Herstellung der getrockneten Pigmentzusammensetzung gemäß Anspruch 5, wobei in den Schritten (ii) und (iii) die wässrige Lösung oder die wässrige Suspension zu der wässrigen Lösung, enthaltend die anorganische Calciumverbindung, über 1 bis 3 Stunden zugegeben wird.

9. Verfahren zur Herstellung der getrockneten Pigmentzusammensetzung gemäß Anspruch 1, wobei das getrocknete Pigment in der Zusammensetzung einen durchschnittlichen Teilchendurchmesser von 5 bis 100 μm aufweist.

10. Verfahren zur Herstellung der getrockneten Pigmentzusammensetzung gemäß Anspruch 1, wobei die getrocknete Pigmentzusammensetzung weniger als 3% Gewichtsverlust beim Erhitzen der Zusammensetzung, gemessen gemäß den Testverfahren für Pigment 23, definiert im Japanese Industrial Standard JIS K5101-191, aufweist.

**Revendications**

1. Procédé de préparation d'une composition de pigment séché comprenant un pigment rouge C.I. à 57 : 1 et des colophanes, qui comprend les étapes d'addition d'une solution aqueuse ou d'une suspension aqueuse contenant des colophanes et un sel soluble dans l'eau d'acide 2-(3-carboxy-2-hydroxynaphtylazo)-5-méthylbenzènesulfonique à une solution aqueuse contenant au moins un composé de calcium inorganique nécessaire pour convertir le sel soluble dans l'eau dans son intégralité en un sel de calcium, et de conversion du mélange en une laque, suivie par un chauffage, une filtration et un séchage supplémentaire,
dans lequel le séchage est réalisé de telle sorte que la perte au chauffage de la composition de pigment dans une sécheuse maintenue à une température de 105 ± 2 °C pendant deux heures soit de moins de 3 %,
dans lequel la solution aqueuse ou suspension aqueuse contenant un sel soluble dans l'eau d'acide 2-(3-carboxy-2-hydroxynaphtylazo)-5-méthylbenzènesulfonique est ajoutée à la solution aqueuse contenant un composé de calcium inorganique, selon l'une quelconque des étapes (i) à (iii) :

(i) la solution aqueuse ou suspension aqueuse est ajoutée à la solution aqueuse contenant le composé de calcium inorganique en une fois ;
(ii) la solution aqueuse ou suspension aqueuse est divisée en plusieurs portions et elles sont ajoutées à la solution aqueuse contenant le composé de calcium inorganique en une fois ; et
(iii) la solution aqueuse ou suspension aqueuse est ajoutée goutte à goutte en continu à la solution aqueuse contenant le composé de calcium inorganique progressivement, de façon à atteindre une cadence d'addition fixe ;

et dans lequel
la quantité des colophanes dans la composition est de 3 à 50 parties en masse sur la base de 100 parties en masse du pigment rouge C.I. à 57 : 1 séché,
la superficie spécifique BET telle que mesurée par un procédé d'absorption d'azote est de 60 à 110 $m^2/g$ et
le volume total de pores ayant un diamètre dans une plage de 0,1 à 3,0 μm de la composition telle que mesurée par un procédé de pénétration au mercure est de 1,30 à 2,00 mL/g.

2. Procédé de préparation de la composition de pigment séché selon la revendication 1, dans lequel une pulvérisation est conduite après séchage de manière à ajuster le diamètre moyen de particule de la composition de pigment séché dans une plage de 5 à 100 μm.

3. Procédé de préparation de la composition de pigment séché selon la revendication 1, dans lequel la concentration en sel soluble dans l'eau d'acide 2-(3-carboxy-2-hydroxynaphtylazo)-5-méthylbenzènesulfonique dans la solution aqueuse ou suspension aqueuse est de 0,3 à 20 % en masse.

4. Procédé de préparation de la composition de pigment séché selon la revendication 1, dans lequel la solution aqueuse contenant un composé de calcium inorganique est de 2 à 20 % en masse.

**5.** Procédé de préparation de la composition de pigment séché selon la revendication 1, dans lequel, dans les étapes (i) et (iii), la solution aqueuse ou suspension aqueuse et la solution aqueuse contenant le composé de calcium inorganique sont mélangées à une température de 0 à 50 °C.

**6.** Procédé de préparation de la composition de pigment séché selon la revendication 1, dans lequel, dans les étapes (i) et (iii), la solution aqueuse ou suspension aqueuse et la solution aqueuse contenant le composé de calcium inorganique sont mélangées à une température de 20 à 40 °C.

**7.** Procédé de préparation de la composition de pigment séché selon la revendication 5, dans lequel, dans les étapes (ii) et (iii), la solution aqueuse ou suspension aqueuse est ajoutée à la solution aqueuse contenant le composé de calcium inorganique pendant 30 minutes à 5 heures.

**8.** Procédé de préparation de la composition de pigment séché selon la revendication 5, dans lequel, dans les étapes (ii) et (iii), la solution aqueuse ou suspension aqueuse est ajoutée à la solution aqueuse contenant le composé de calcium inorganique pendant 1 à 3 heures.

**9.** Procédé de préparation de la composition de pigment séché selon la revendication 1, dans lequel le pigment séché dans la composition a un diamètre moyen de particule de 5 à 100 µm.

**10.** Procédé de préparation de la composition de pigment séché selon la revendication 1, dans lequel la composition de pigment séché a moins de 3 % de perte au chauffage de la composition telle que mesurée selon le procédé d'essai du Pigment 23 défini dans la norme industrielle japonaise JIS K5101-1991.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP SHO59191765 B
- JP HEI5184901 B
- JP HEI9188846 B
- US 5190585 A
- JP 2002356641 A
- GB 334874 A
- US 6159649 A
- US 4767844 A